(19) Europäisches Patentamt
European Patent Office
Office européen des brevets

(11) **EP 3 356 216 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(21) Anmeldenummer: **16770454.3**

(22) Anmeldetag: **09.09.2016**

(51) Int Cl.:
**B63B 17/00** *(2006.01)*      **B63B 43/00** *(2006.01)*
**B63B 27/24** *(2006.01)*

(86) Internationale Anmeldenummer:
**PCT/EP2016/071263**

(87) Internationale Veröffentlichungsnummer:
**WO 2017/055055 (06.04.2017 Gazette 2017/14)**

(54) **SCHADENSEINGRENZUNG AUF EINEM SCHIFF MIT EINEM ROHRSYSTEM**

DAMAGE CONTAINMENT ON A SHIP HAVING A PIPE SYSTEM

CONFINEMENT DES DOMMAGES SUR UN NAVIRE DOTÉ D'UN SYSTÈME DE TUYAUTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2015 DE 102015219046**

(43) Veröffentlichungstag der Anmeldung:
**08.08.2018 Patentblatt 2018/32**

(73) Patentinhaber:
- **thyssenkrupp Marine Systems GmbH**
  **24143 Kiel (DE)**
- **thyssenkrupp AG**
  **45143 Essen (DE)**

(72) Erfinder:
- **SCHEEL, Hans-Joachim**
  **28755 Bremen (DE)**
- **BUSE, Hauke**
  **26736 Krummhörn (DE)**

(74) Vertreter: **thyssenkrupp Intellectual Property GmbH**
**ThyssenKrupp Allee 1**
**45143 Essen (DE)**

(56) Entgegenhaltungen:
**US-A- 3 848 559      US-A1- 2009 199 755**
**US-A1- 2015 184 617**

**Beschreibung**

Die Erfindung betrifft ein Schiff sowie ein Verfahren zur Schadenseingrenzung. Durch die Erfindung soll die aus einem zum Fluidtransport verwendetem Rohrleitungssystem austretende Fluidmenge im Schadensfall minimiert und die Funktionsfähigkeit des Rohrleitungssystems weitgehend erhalten bleiben.

Ein Schiff mit einem aus mehreren Abschnitten bestehendem Rohrleitungssystem ist aus dem Patentschrift US 3,848,559 bekannt. Benachbarte Abschnitte können im Notfall durch Absperrventile von einander isoliert werden.

Aufgabe der Erfindung ist es, ein Schiff bzw. ein Verfahren bereitzustellen, bei welchem die austretende Fluidmenge im Falle eine Beschädigung des Rohrleitungssystems (Havarie) minimiert werden kann.

Gelöst wird diese Aufgabe durch das Schiff mit den in Anspruch 1 angegebenen Merkmalen sowie das Verfahren mit den in Anspruch 9 angegebenen Merkmalen. Vorteilhafte Weiterbildungen ergeben sich aus den Unteransprüchen, der nachfolgenden Beschreibung sowie den Zeichnungen.

Der Begriff Bereich ist im Sinne der Erfindung weit zu definieren und umfasst jedes definierbare räumliche Gebiet, wobei das Schiff als Ganzes ebenfalls ein Bereich sein kann. Ebenso kann jeder Abschnitt oder jede Sektion ein Bereich sein, ebenso ein kleines Gebiet innerhalb einer Sektion oder eines Abschnitts.

Das erfindungsgemäße Schiff weist ein Rohrleitungssystem und ein Steuersystem auf. Das Rohrleitungssystem dient zur Versorgung wenigstens eines ersten Verbrauchers. Durch das Rohrleitungssystem können bevorzugt Fluide transportiert werden. Bei den Fluiden kann es sich beispielsweise um Wasser, zum Beispiel um Trinkwasser, Prozesswasser, Kühlwasser oder Abwasser, um Gase und Gasgemische, insbesondere um Sauerstoff, Wasserstoff, Methan, Ethan, Propan, Butan, Luft, insbesondere um Druckluft, um Treibstoffe, insbesondere um Diesel oder Benzin, Schmierstoffe oder Hydraulikflüssigkeit, beispielsweise Hydrauliköl oder Wasser, handeln. Besonders bevorzugt können Flüssigkeiten durch das Rohrleitungssystem transportiert werden. Transportiertes Fluid und der wenigstens eine erste Verbraucher sind aufeinander abgestimmt. So kann es sich beispielsweise bei dem Fluid um Trinkwasser und bei dem Verbraucher um einen Wasserhahn, bei dem Fluid um Diesel und bei dem Verbraucher um einen Dieselmotor, bei dem Fluid um Kühlwasser und bei dem Verbraucher um eine Raumklimatisierung handeln, bei dem Fluid um Wasserstoff und bei dem Verbraucher um eine Brennstoffzelle handeln. Selbstverständlich können auch verschiedene Verbraucher an ein Rohrleitungssystem angeschlossen sein, sofern diese das gleiche Fluid benötigen. Beispielsweise sei hierfür Druckluft oder Hydraulikflüssigkeit genannt, da auf Schiffen oft viele verschiedene Geräte mit Druckluft oder hydraulisch betrieben werden.

Selbstverständlich können an das Rohrleitungssystem auch weitere Anlagen angeschlossen sein, beispielsweise Einspeisevorrichtungen, Lagervorrichtungen, beispielsweise Tanks oder ein Metallhydridspeicher für Wasserstoff, Pumpen, Kompressoren, Wärmetauscher, Ventile, Durchflussregler, und/oder weitere Sensoren, beispielsweise Thermoelemente.

Das Rohrleitungssystem weist wenigstens einen ersten Abschnitt, einen zweiten Abschnitt und einen dritten Abschnitt auf, wobei benachbarte Abschnitte mittels Absperrvorrichtungen trennbar miteinander verbunden sind. Verschiedene Abschnitte definieren sich durch die Trennbarkeit mittels der Absperrvorrichtung. Verschiedene Abschnitte können in den gleichen räumlichen Bereichen des Schiffes Verlaufen. Beispielsweise können die Abschnitte mit den durch Schotts abgetrennten Bereichen räumlich zusammenfallen. Vorteil dieser Ausführungsform ist, dass die Absperrvorrichtung zur Trennung von Abschnitten auch das Rohrleitungssystem an den Schotten abdichten kann.

Das Rohrleitungssystem weist einen ersten Hauptsensor auf. Der Hauptsensor dient dazu, eine Havarie (Leckage, Undichtigkeit) durch Messung einer Messgröße schnell für das ganze System festzustellen. Beispielsweise kann es sich um einen Drucksensor handeln, wenn es sich um ein gasförmiges Fluid handelt. Durch die Havarie würde es in diesem Fall zum Druckabfall im gesamten Rohrleitungssystem kommen. Handelt es sich bei dem Fluid um eine Flüssigkeit, so kann ebenfalls ein Drucksensor als Hauptsensor verwendet werden, wobei der Drucksensor jedoch bevorzugt am höchst gelegenen Punkt oder am tiefst gelegenen Punkt des Rohrleitungssystems angeordnet ist. Läuft die Flüssigkeit aus, so fällt der Druck am höchsten Punkt extrem schnell ab, da dieser Bereich "trocken läuft". Auch der Druck am tiefst gelegenen Punkt verringert sich, da die Flüssigkeitssäule weniger hoch und dadurch der Druck geringer wird. Besonders bevorzugt ist der Hauptsensor bei Verwendung einer Flüssigkeit am höchst gelegenen Punkt (oder in dessen unmittelbarer Nähe) angeordnet.

Das Steuersystem ist zur Auslesung eines ersten Hauptsignals aus dem ersten Hauptsensor ausgebildet. Das erste Hauptsignal kann beispielsweise ein digitales Signal sein, welches durch den ersten Hauptsensor erzeugt wird und die Information der durch den ersten Hauptsensor erfassten Messgröße beinhaltet. Es kann sich bei dem ersten Hauptsignal auch um ein analoges Signal handeln. Aufgrund der üblichen Steuersysteme sind digitale Signale jedoch bevorzugt. Ferner ist das Steuersystem zur Ansteuerung der Absperrvorrichtungen ausgebildet.

Das Steuersystem ist dazu ausgebildet, alle Absperrvorrichtungen zu verschließen, sobald das erste Hauptsignal einen Schwellwert erreicht oder überschreitet. Unter Überschreiten ist im Sinne jede Veränderung des Signals von einem Wert auf der einen Seite der Schwelle auf die andere Seite der Schwelle zu verstehen. Fällt also beispielsweise ein Druck von einem normalen Wert, welcher oberhalb einer Schwelle liegt, durch ein Leck im System auf einen Wert, welcher unterhalb der Schwelle liegt, so wird hierdurch auch die Schwelle überschritten. Wird dieses Erreichen oder Überschreiten der Schwelle festgestellt, so verschließt das Steuersystem alle Absperrvorrichtungen.

Durch das Verschließen aller Absperrvorrichtungen werden alle Abschnitte voneinander separiert. Das hat zur Auswirkung, dass nur die Menge an Fluid, welche sich im havarierten Abschnitt befindet, austreten kann. Dieses ist neben dem reinen Verlust des Fluids auch aus anderen Gründen wichtig. Handelt es sich bei dem Fluid um eine Flüssigkeit, beispielsweise um Wasser ergibt sich automatisch, dass eine in einem Schiff frei bewegliche Menge an Wasser sich negativ auf die Schwimmfähigkeit des Schiffs auswirken kann und im schlimmsten Fall zum Kentern beitragen kann. Handelt es sich bei dem Fluid um ein brennbares Fluid, beispielsweise Diesel oder Wasserstoff, so ist auch selbsterklärend, dass die Minimierung der aus einem Leck austretenden Menge absolut wünschenswert ist.

In einer weiteren Ausführungsform der Erfindung ist der erste Hauptsensor oberhalb des ersten Verbrauchers angeordnet. Wie bereits ausgeführt, ist es vorteilhaft, wenn der erste Hauptsensor am höchsten Punkt angeordnet ist, wobei es hier nicht auf eine exakte Anordnung oberhalb des höchsten Punktes ankommt. Vielmehr ist eine Anordnung oberhalb des ersten Verbrauchers und dem höchsten Punkt ausreichend. Weist das Schiff eine Mehrzahl an Verbrauchern auf, so ist die Anordnung oberhalb des höchst gelegenen Verbrauchers und damit oberhalb aller Verbraucher vorteilhaft.

In einer weiteren Ausführungsform der Erfindung sind ein erster Hauptsensor oberhalb des höchst gelegenen Verbrauchers und ein zweiter Hauptsensor unterhalb des tiefst gelegenen Verbrauchers angeordnet.

In einer weiteren Ausführungsform der Erfindung sind ein erster Hauptsensor oberhalb des höchst gelegenen Verbrauchers in einem ersten Teilbereich und ein dritter Hauptsensor oberhalb des höchst gelegenen Verbrauchers in einem zweiten Teilbereich angeordnet. Schiffe weisen regelmäßig mehr als einen Aufbau auf, welche teilweise als Insel bezeichnet werden. In einem solchen Fall ist es vorteilhaft in jedem Aufbau einen eigenen Hauptsensor anzuordnen. Dieses ist insbesondere dann besonders vorteilhaft, wenn diese Teilbereiche vollständig von einander trennbar ausgeführt sind.

In einer weiteren Ausführungsform der Erfindung weist das Schiff wenigstens einen ersten Nebensensor auf, wobei das Steuersystem zur Auslesung von einem ersten Nebensignal aus dem ersten Nebensensor ausgebildet ist. Durch die Verwendung wenigstens eines ersten Nebensensors können mehr Daten gewonnen werden und somit ist die Identifizierung des havarierten Abschnitts leichter möglich. Als Nebensensor kann ein Drucksensor Verwendung finden. Bei Verwendung von Flüssigkeiten kann als Nebensensor auch ein Schwinggabelsensor Verwendung finden, da ein Schwinggabelsensor vergleichsweise einfach das Vorhandensein einer Flüssigkeit detektieren kann. Es können aber auch Leitfähigkeitssensoren für wässrige Flüssigkeiten Verwendung finden. Es ist ebenfalls möglich, einen Sensor, beispielsweise einen Sauerstoffsensor zu verwenden, der eindringenden Luftsauerstoff detektiert. Dieses könnte insbesondere vorteilhaft sein, wenn Wasserstoff als Fluid eingesetzt wird. Es kann vorgesehen sein, dass der Nebensensor unterhalb einer bestimmten Absperrvorrichtung angeordnet ist und nur die bestimmte Absperrvorrichtung in Abhängigkeit des ersten Nebensignals geschlossen wird. In einer vorteilhaften Weiterbildung ist unterhalb jeder Absperrvorrichtung ein Nebensensor angeordnet und funktional zugeordnet und es wird die Absperrvorrichtung in Abhängigkeit des vom zugeordneten Nebensensors abgegebenen Nebensignals betätigt.

In einer weiteren Ausführungsform der Erfindung weist jeder Abschnitt wenigstens einen ersten Nebensensor oder einen ersten Hauptsensor auf. Hierdurch kann das Steuersystem Informationen aus jedem Abschnitt gewinnen und so den havarierten Abschnitt eindeutig identifizieren.

In einer weiteren Ausführungsform der Erfindung ist eine Auffüllvorrichtung mit dem Rohrleitungssystem verbunden, wobei das Steuersystem zur Auffüllung des Rohrleitungssystems durch die Auffüllvorrichtung ausgebildet ist. Damit der durch die Havarie nicht betroffene Teil des Rohrleitungssystems wieder vollständig eingesetzt werden kann, ist es vorteilhaft, die durch das Leck ausgetretene Fluidmenge zu ersetzen. Insbesondere bei der Verwendung von Flüssigkeiten wird so sichergestellt, dass kein Verbraucher oberhalb des Flüssigkeitsspiegels liegt. Die für die Auffüllung in der Auffüllvorrichtung vorgehaltene Fluidmenge kann grob aus dem größten in einem Abschnitt vorhandenen Fluidvolumen zuzüglich des anzunehmenden Volumens, welches aus einem maximal anzunehmenden Leck ausströmen kann, bevor die Absperrvorrichtungen verschlossen werden können, abgeschätzt werden.

In einer weiteren Ausführungsform der Erfindung weist das Schiff wenigstens eine erste Pumpe zur Förderung eines Fluids durch das Rohrleitungssystem auf. Das Steuersystem ist zum Anschalten und Abschalten der wenigstens einen ersten Pumpe ausgebildet. Mit dem Verschließen der Absperrvorrichtungen wird auch der Fluidstrom unterbrochen, eine Förderung von Fluid ist daher nicht mehr möglich. Aus diesem Grund sollte das Steuersystem so ausgebildet sein, dass das Steuersystem die Pumpe abschalten kann. Alternativ kann dieses auch durch eine Sicherheitsschaltung in der Pumpe realisiert sein.

In einer weiteren Ausführungsform der Erfindung wird wenigstens ein Abschnitt aus wenigstens zwei Sektionen gebildet, wobei die benachbarten Sektionen mittels Nebenabsperrvorrichtungen trennbar miteinander verbunden sind. Die Nebenabsperrvorrichtungen zwischen zwei benachbarten Sektionen eines Abschnitts sind vorzugsweise ausschließlich manuell bedienbar. Durch die Auftrennung des Rohrleitungssystems in Abschnitte ist eine schnelle und automatische Eingrenzung eines Lecks möglich. Innerhalb des havarierten Abschnitts ist es jedoch wünschenswert in einem zweiten Schritt, alle Bereiche innerhalb des havarierten Abschnitts wieder in Betrieb nehmen zu können, die vom Leck nicht betroffen sind. Da hier kein akuter Handlungsbedarf mehr besteht, wird dieses vorzugsweise manuell durchgeführt, um die Komplexität des Systems so gering wie möglich zu halten.

In einer weiteren Ausführungsform der Erfindung weist das Schiff wenigstens eine Vorrichtung zur Einleitung eines Testfluids in das Rohrleitungssystem auf. Wird im Rohrleitungssystem eine Flüssigkeit transportiert, so kann es bei einem Leck entlang einer horizontal verlaufenden Strecke schwer sein, den havarierten Abschnitt zu identifizieren, insbesondere wenn die Flüssigkeit bereits zu einem großen Teil ausgetreten ist. Daher ist es vorteilhaft, bei solchen Geometrien ein Testfluid, beispielsweise Druckluft, in das Rohrleitungssystem einzuleiten. In Abschnitten, welche kein Leck aufweisen, bleibt der durch das Testfluid erzeugte Druck zunächst konstant bzw. wird wenigstens eine deutlich geringere Abfallrate gegenüber dem havarierten Abschnitt aufweisen. Das Testfluid kann bevorzugt Druckluft, Stickstoff, ein Gasgemisch mit einem geringen Anteil an Wasserstoff sein, beispielsweise Formiergas 95/05, $^{4}_{2}He$ oder $^{3}_{2}He$. Insbesondere Formiergas und Helium eignen sich besonders gut zur Lecksuche in der Umgebung des Rohrleitungssystems mittels tragbarer Sensoren, beispielsweise Massenspektrometern mit geringer Auflösung.

Die Aufteilung der Abschnitte kann beispielsweise so erfolgen, dass in jedem Abschnitt ein etwas gleichgroßer Fluidverbrauch durch die in diesem Abschnitt befindlichen Verbraucher erfolgt. Ebenso kann die Aufteilung der Abschnitte so erfolgen, dass das in allen Abschnitten vorhandene Fluidvolumen in etwa gleich groß ist. Weiter kann die Aufteilung der Abschnitte ausschließlich nach baulichen Gegebenheiten auf dem Schiff erfolgen. Selbstverständlich kann die Aufteilung der Abschnitte aufgrund einer Abwägung der oben beispielhaft genannten Kriterien erfolgen.

In einem weiteren Aspekt betrifft die Erfindung ein Verfahren zur Schadenseingrenzung in einem Rohrleitungssystem auf einem Schiff gemäß einem der vorstehenden Ansprüche, wobei das Verfahren die folgenden Schritte aufweist:

    a) Erfassen des ersten Hauptsignals,
    b) Vergleichen des ersten Hauptsignals mit einem Schwellwert,
    c) bei Erreichen oder Überschreiten des Schwellwertes Verschließen aller Absperrvorrichtungen zwischen benachbarten Abschnitten.

Durch das Verfahren ist es möglich, vollautomatisch zunächst alle Abschnitte zu separieren. So ist die Menge an Fluid, welche aus einem Leck austreten kann, begrenzt, die Gefahr für das Schiff minimiert. Durch die vollständige Automatisierung kann die Menge an austretendem Fluid weiter begrenzt werden, da der havarierte Abschnitt so innerhalb kürzester Zeit isoliert wird.

In einer weiteren Ausführungsform der Erfindung weist das Verfahren zusätzlich die folgenden Verfahrensschritte auf:

    d) Erfassen der ersten Nebensignale,
    e) Feststellung der zeitlichen Veränderung der ersten Nebensignale,
    f) Identifizieren eines havarierten Abschnitts,
    h) Öffnen der vorher verschlossenen Absperrvorrichtungen, welche nicht an den havarierten Abschnitt angrenzen.

Durch diese Ausführungsform wird schnell die maximal mögliche Einsatzbereitschaft des Schiffes wiederhergestellt. Vorteil dieser Ausführung ist weiter, dass die Erfassung des ersten Hauptsignals oftmals sehr viel sensitiver und damit schneller erfolgt. Nach der Trennung der Abschnitte durch Verschließen der Absperrvorrichtung tritt Fluid nur in dem havarierten Abschnitt aus, was zeitlich später durch das Nebensignal aus dem havarierten Abschnitt feststellbar ist.

In einer vorteilhaften Ausführungsform wird im Schritt h) in einem Schritt h2) die Versorgung aller nicht havarierten Abschnitte mit Fluid geprüft. Sollte in Schritt h2) ein nicht havarierter Abschnitt nicht mit Fluid versorgt werden, wird in einem Schritt h3) geprüft ob zusätzliche Absperrvorrichtungen geöffnet werden können, deren Öffnung keine Versorgung des havarierten Abschnitts bewirken aber eine Versorgung des nicht versorgten Abschnitts ermöglichen. Auf diese Weise kann die Versorgung eines isolierten Abschnitts durch Öffnung einer Umgehungsleitung um den havarierten Abschnitt herum wieder hergestellt werden.

In einer weiteren Ausführungsform der Erfindung weist das Verfahren den Verfahrensschritt g) Wiederauffüllen des Rohrleitungssystems auf. Durch das Wiederauffüllen kann eine Beschädigung von Verbrauchern verhindert werden, sofern diese durch den Fluidverlust nicht mehr mit Fluid versorgt werden würden.

In einer weiteren Ausführungsform der Erfindung wird vor, nach oder gleichzeitig mit Verfahrensschritt c) der Verfahrensschritt c1) Abschalten der wenigstens einen ersten Pumpe durchgeführt. Unter vor oder nach ist in diesem Zusammenhang unmittelbar vor bzw. unmittelbar nach zu verstehen. Die konkrete Reihenfolge kann sich bereits durch die verschiedenen Geschwindigkeiten zur Durchführung der Verfahrensschritte c) und c1) bzw. die für die Signalübertragung notwendigen Zeiten ergeben. Besonders bevorzugt ist ein gleichzeitiges Ansteuern sowohl der wenigstens einen ersten Pumpe und der Absperrvorrichtungen.

In einer weiteren Ausführungsform der Erfindung wird nach oder gleichzeitig mit Verfahrensschritt h) der Verfahrensschritt h1) Anschalten der wenigstens einen ersten Pumpe durchgeführt.

In einer weiteren Ausführungsform der Erfindung werden nach Verfahrensschritt h) die folgenden Verfahrensschritte durchgeführt:

i1) Verschließender aller Nebenabsperrvorrichtungen im havarierten Abschnitt,
j1) Identifizieren der havarierten Sektion,
k1) Öffnen der Absperrvorrichtungen und Nebenabsperrvorrichtungen, welche nicht an die havarierte Sektion angrenzen.

In einer weiteren alternativen Ausführungsform der Erfindung werden nach Verfahrensschritt h) die folgenden Verfahrensschritte durchgeführt:

i2) Identifizieren der havarierten Sektion,
j2) Verschließender aller Nebenabsperrvorrichtungen, welche an die havarierte Sektion angrenzen,
k2) Öffnen der Absperrvorrichtungen, welche nicht an die havarierte Sektion angrenzen.

Durch diese zusätzlichen Verfahrensschritte der beiden alternativen Ausführungsformen wird der voll einsatzfähige Bereich des Schiffs um die nicht havarierten Sektionen vergrößert. Hierbei kann entweder zunächst ein Abtrennen der Sektionen erfolgen und anschließend nach dem Auffinden des Lecks alle nicht havarierte Sektionen über die angrenzenden nicht havarierten Abschnitte wieder versorgt werden. Alternativ kann zunächst das Leck gesucht, nur die havariert Sektion dann abgegrenzt werden und anschließend alle nicht havarierten Sektionen mit nicht havarierten Abschnitten verbunden werden. Welche Alternative sinnvoller ist, kann zum Beispiel von der Art des Fluids abhängig sein. Handelt es sich zum Beispiel um Öl, so kann die Leckstelle sicher schnell visuell gefunden werden und die zweite Alternative dürfte die effizientere sein. Handelt es sich bei dem Fluid um Druckluft, so dürfte die erste Alternative sinnvoller sein. Gegebenenfalls würde man dann, wenn das Leck nicht einfach gefunden werden kann, eine Sektion nach der anderen mit dem wieder funktionsbereitem Bereich des Rohrleitungssystems verbinden, bis man die havarierte Sektion verbunden hat und dieses durch Druckabfall im Gesamtsystem detektieren kann.

Selbstverständlich kann ein Schiff auch mehr als ein erfindungsgemäßes Rohrleitungssystem aufweisen. Diese wenigstens zwei getrennten Rohrleitungssysteme können das gleiche oder verschiedene Fluide transportieren. Diese wenigstens zwei getrennten Rohrleitungssysteme können über ein gemeinsames Steuersystem oder über verschiedene Steuersysteme gesteuert werden. Selbstverständlich können auch einzelne Bestandteile redundant oder mehrfach redundant ausgeführt sein.

Sollte ein Abschnitt oder eine Sektion ausschließlich über einen havarierten Bereich mit dem Rohrleitungssystem verbunden sein, so kann eine Versorgung dieser intakten Bereiche nicht automatisch wieder hergestellt werden. In diesem Fall wird vorzugsweise provisorisch eine Schlauchverbindung hergestellt, welche den havarierten Bereich überbrückt.

Selbstverständlich kann ein erfindungsgemäßes Rohrleitungssystem auch außerhalb eines Schiffes, beispielsweise in einem Gebäude, eingesetzt werden. Auch in einem Gebäude kann durch das erfindungsgemäße Rohrleitungssystem die austretende Fluidmenge reduziert werden. Der Vorteil der reduzierten Fluidmenge kommt jedoch insbesondere auf einem Schiff zum Tragen, da ausgetretenes Fluid die Stabilität und somit Sicherheit des ganzen Schiffes beeinflussen kann.

Nachfolgend sind das erfindungsgemäße Schiff und das erfindungsgemäße Verfahren anhand in den Zeichnungen dargestellter Ausführungsbeispiele näher erläutert.

Fig. 1    vereinfachte Schemaskizze eines Schiffes

Fig. 2    vereinfachte Schemaskizze des Abschnitts 14

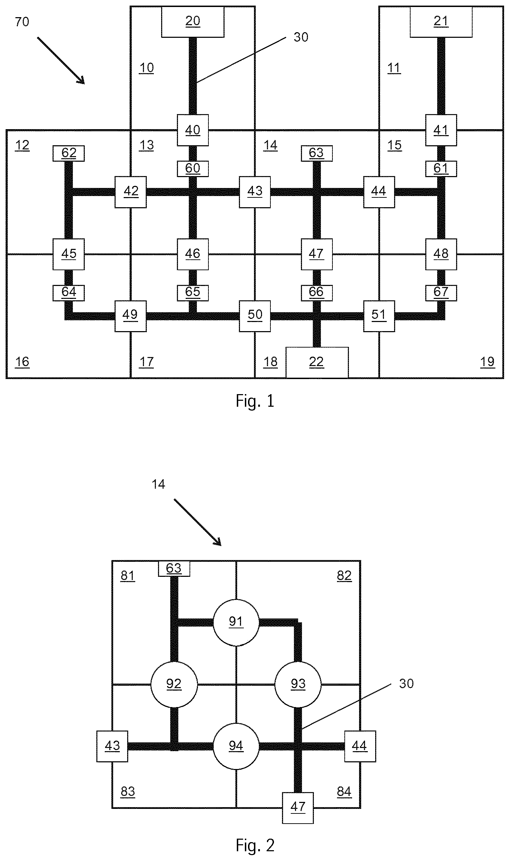

In Fig. 1 ist eine sehr vereinfachte Schemaskizze eines Schiffes 70 dargestellt. Zur Vereinfachung sind das Steuersystem sowie die Verbindungen vom Steuersystem zu den anderen Komponenten nicht dargestellt. Das Schiff 70 weist ein Rohrleitungssystem 30 auf. Zur weiteren Vereinfachung wurde ein Rohrleitungssystem 30 dargestellt, welches nur einen Versorgungsstrang benötigt, beispielsweise Druckluft. Bei der Verwendung von im Kreislauf fließenden Fluiden, zum Beispiel Kühlwasser steigt die Komplexität des Systems an, das dahinter stehende Prinzip ist identisch. Die Skizze soll schematisch einen Querschnitt durch das Schiff 70 darstellen, sodass in der Skizze oben dargestellte Bereiche höher angeordnete Bereiche repräsentieren sollen. Zur Vereinfachung sind auch keine Verbraucher, Fluideinspeisungen, Pumpen oder weitere Bauteile dargestellt.

Das Rohrleitungssystem 30 des Schiffs 70 ist in die zehn Abschnitte 10 bis 19 unterteilt, wobei vereinfachend die Größe alle Abschnitte gleich gewählt wurde. Beispielsweise können die Abschnitte 10 und 11 Aufbauten des Schiffes 70 sein, die Abschnitte 12 bis 15 oberhalb der Wasserlinie angeordnet sein und die Abschnitte 16 bis 19 unterhalb der Wasserlinie.

Das Schiff 70 weist drei Hauptsensoren 20 bis 22 auf. Der Hauptsensor 20 ist im Abschnitt 10 und der Hauptsensor 21 im Abschnitt 11 angeordnet. Diese sind an den höchsten Stellen des Rohrleitungssystems 30 angeordnet, sodass im Falle eines Lecks im Rohrleitungssystem 30 ein Druckabfall leicht detektiert werden kann. Aus diesem Grund ist auch der Hauptsensor 22 im Abschnitt 18 an der tiefsten Stelle des Rohrleitungssystems 30 angeordnet. Die Hauptsensoren 20, 21 und 22 sind als Drucksensoren ausgeführt.

Die Abschnitte 10 bis 19 sind durch die Absperrvorrichtungen 40 bis 51 trennbar miteinander verbunden. In den Abschnitten 12 bis 19 befinden sich des Weiteren Nebensensoren 60 bis 67. Im Falle einer Druckluftversorgung können die Nebensensoren 60 bis 67 als Drucksensoren ausgeführt sein. Dient das Rohrleitungssystem 30 zum Beispiel zur Versorgung mit Trinkwasser, so können die Nebensensoren 60 bis 67 beispielsweise als Schwinggabelsensor ausgeführt sein. Diese wären dann innerhalb des jeweiligen Abschnitts 12 bis 19 vorzugsweise an den höchsten Stellen innerhalb des Rohrleitungssystems, höchst vorzugsweise unmittelbar unterhalb der Absperrvorrichtungen 40, 41, 45, 46, 47 und 48, angeordnet.

Tritt nun beispielsweise im Abschnitt 14 ein Leck im Rohrleitungssystem 30 auf, so wird im Falle gasförmiger Fluide an den Hauptsensoren 20 bis 22 ein Druckabfall registriert, im Falle flüssiger Fluide am Hauptsensor 22 ein Druckabfall und an den Hauptsensoren 20 und 21 das Absinken des Flüssigkeitsspiegels unter die Hauptsensoren 20 und 21 registriert. Das Steuersystem verschließt daraufhin alle Absperrvorrichtungen 40 bis 51. Hierdurch sind alle Abschnitte 10 bis 19 separiert. Durch das Leck tritt nur noch im havarierten Abschnitt 14 Fluid aus. Dadurch sinkt der Druck nur im Abschnitt 14, was am Nebensensor 63 detektiert wird. Die anderen Nebensensoren 60 bis 62 und 64 bis 67 detektieren keinen weiteren Druckabfall. Jetzt können die Absperrvorrichtungen 40 bis 42, 45, 46 und 48 bis 51 wieder geöffnet werden. Hierdurch werden alle intakten Abschnitte 10 bis 13 und 15 bis 19 wieder miteinander verbunden. Das System wäre in diesen Bereichen voll einsatzfähig.

Fig. 2 zeigt beispielhaft den in die vier Sektionen 81 bis 84 unterteilten Abschnitt 14, in welchem gemäß dem oben ausgeführten Beispiel ein Leck aufgetreten ist. Um nun auch innerhalb des Abschnitts 14 zeitnah Verbraucher wieder über das Rohrleitungssystem 30 versorgen zu können, ist der Abschnitt 14 durch vier Nebenabsperrvorrichtungen 91 bis 94 in vier Sektionen unterteilt. Der Nebensensor 63 ist innerhalb des Abschnittes 14 an der höchsten Stelle angeordnet, um so die Detektion zu erleichtern.

Jetzt kann entweder zunächst das Leck gesucht werden, welches beispielsweise in Sektion 84 liegt. In diesem Fäll würden die Nebenabsperrvorrichtungen 93 und 94 geschlossen werden. Anschließend kann die Absperrvorrichtung 43 geöffnet werden, sodass die Sektionen 81, 82 und 83 wieder voll einsatzfähig sind.

Alternativ können auch zunächst alle Nebenabsperrvorrichtungen 91 bis 94 geschlossen werden und anschließend das Leck gesucht werden. In diesem Beispiel würde nach dem Finden des Lecks in Sektion 84 die Absperrvorrichtung 43 sowie die Nebenabsperrvorrichtungen 91 und 92 wieder geöffnet werden.

Bezugszeichen

| | |
|---|---|
| 10-19: | Abschnitt |
| 20-22: | Hauptsensor |
| 30: | Rohrleitungssystem |
| 40-51: | Absperrvorrichtung |
| 60-67: | Nebensensor |
| 70: | Schiff |
| 81-84: | Sektion |
| 91-94: | Nebenabsperrvorrichtung |

**Patentansprüche**

1. Schiff (70) mit einem Rohrleitungssystem (30) und einem Steuersystem, wobei das Rohrleitungssystem (30) zur Versorgung wenigstens eines ersten Verbrauchers dient, wobei das Rohrleitungssystem (30) in wenigstens einen ersten Abschnitt (10-19), einen zweiten Abschnitt (10-19) und einen dritten Abschnitt (10-19) aufweist, wobei benachbarte Abschnitte (10-19) mittels Absperrvorrichtungen (40-51) trennbar miteinander verbunden sind, wobei das Rohrleitungssystem (30) einen ersten Hauptsensor (20, 21, 22) aufweist, wobei das Steuersystem zur Auslesung eines ersten Hauptsignals aus dem ersten Hauptsensor (20, 21, 22) und zur Ansteuerung der Absperrvorrichtungen (40-51) ausgebildet ist, wobei das Steuersystem dazu ausgebildet ist, alle Absperrvorrichtungen (40-51) zu verschließen, sobald das erste Hauptsignal einen Schwellwert erreicht oder überschreitet.

2. Schiff (70) nach Anspruch 1, **dadurch gekennzeichnet, dass** der erste Hauptsensor (20, 21, 22) oberhalb des ersten Verbrauchers angeordnet ist.

3. Schiff (70) nach einem der vorstehenden Ansprüche, **dadurch gekennzeichnet, dass** das Schiff (70) wenigstens einen ersten Nebensensor (60-67) aufweist, wobei das Steuersystem zur Auslesung von einem ersten Nebensignal aus dem ersten Nebensensor (60-67) ausgebildet ist.

4. Schiff (70) nach Anspruch 3, **dadurch gekennzeichnet, dass** jeder Abschnitt (10-19) wenigstens einen ersten Nebensensor (60-67) oder einen ersten Hauptsensor (20, 21, 22) aufweist.

5. Schiff (70) nach einem der vorstehenden Ansprüche, **dadurch gekennzeichnet, dass** eine Auffüllvorrichtung mit dem Rohrleitungssystem (30) verbunden ist, wobei das Steuersystem zur Auffüllung des Rohrleitungssystems (30) durch die Auffüllvorrichtung ausgebildet ist.

6.  Schiff (70) nach einem der vorstehenden Ansprüche, **dadurch gekennzeichnet, dass** das Schiff (70) wenigstens eine erste Pumpe zur Förderung eines Fluids durch das Rohrleitungssystem (30) aufweist und wobei das Steuersystem zum Anschalten und Abschalten der wenigstens einen ersten Pumpe ausgebildet ist.

7.  Schiff (70) nach einem der vorstehenden Ansprüche, **dadurch gekennzeichnet, dass** wenigstens ein Abschnitt (10-19) aus wenigstens zwei Sektionen (81-84) gebildet wird, wobei die benachbarten Sektionen (81-84) mittels Nebenabsperrvorrichtungen (91-94) trennbar miteinander verbunden sind, wobei die Nebenabsperrvorrichtungen (91-94) zwischen zwei benachbarten Sektionen (81-84) eines Abschnitts (10-19) vorzugsweise ausschließlich manuell bedienbar sind.

8.  Schiff (70) nach einem der vorstehenden Ansprüche, **dadurch gekennzeichnet, dass** das Schiff (70) wenigstens eine Vorrichtung zur Einleitung von Testfluid in das Rohrleitungssystem aufweist.

9.  Verfahren zur Schadenseingrenzung in einem Rohrleitungssystem (30) auf einem Schiff (70) gemäß einem der vorstehenden Ansprüche, wobei das Verfahren die folgenden Schritte aufweist:

    a) Erfassen des ersten Hauptsignals,
    b) Vergleichen des ersten Hauptsignals mit einem Schwellwert,
    c) bei Erreichen oder Überschreiten des Schwellwertes Verschließen aller Absperrvorrichtungen (40-51) zwischen benachbarten Abschnitten (10-19).

10. Verfahren nach Anspruch 9, **dadurch gekennzeichnet, dass** das Verfahren die folgenden Verfahrensschritte aufweist:

    d) Erfassen der ersten Nebensignale,
    e) Feststellung der zeitlichen Veränderung der ersten Nebensignale,
    f) Identifizieren eines havarierten Abschnitts,
    h) Öffnen der Absperrvorrichtungen (40-51), welche nicht an den havarierten Abschnitt angrenzen.

11. Verfahren nach einem der Ansprüche 9 bis 10, **dadurch gekennzeichnet, dass** das Verfahren den Verfahrensschritt g) Wiederauffüllen des Rohrleitungssystems (30) aufweist.

12. Verfahren nach einem der Ansprüche 9 bis 11, **dadurch gekennzeichnet, dass** vor, nach oder gleichzeitig mit Verfahrensschritt c) der Verfahrensschritt c1) Abschalten der wenigstens einen ersten Pumpe durchgeführt wird.

13. Verfahren nach Anspruch 12, **dadurch gekennzeichnet, dass** nach oder gleichzeitig mit Verfahrensschritt h) der Verfahrensschritt h1) Anschalten der wenigstens einen ersten Pumpe durchgeführt wird.

14. Verfahren nach einem der Ansprüche 10 bis 13, **dadurch gekennzeichnet, dass** nach Verfahrensschritt h) die folgenden Verfahrensschritte durchgeführt werden:

    i1) Verschließender aller Nebenabsperrvorrichtungen (91-94) im havarierten Abschnitt,
    j1) Identifizieren der havarierten Sektion,
    k1) Öffnen der Absperrvorrichtungen (40-51) und Nebenabsperrvorrichtungen (91-94), welche nicht an die havarierte Sektion angrenzen.

15. Verfahren nach einem der Ansprüche 10 bis 13, **dadurch gekennzeichnet, dass** nach Verfahrensschritt h) die folgenden Verfahrensschritte durchgeführt werden:

    i2) Identifizieren der havarierten Sektion,
    j2) Verschließender aller Nebenabsperrvorrichtungen (91-94), welche an die havarierte Sektion angrenzen,
    k2) Öffnen der Absperrvorrichtungen (40-51), welche nicht an die havarierte Sektion angrenzen.

**Claims**

1.  Ship (70) having a pipeline system (30) and a control system, wherein the pipeline system (30) is used to supply at least a first consumer, wherein the pipeline system (30) comprises at least a first portion (10-19), a second portion (10-19) and a third portion (10-19), wherein adjacent portions (10-19) are connected to each other so as to be able to be separated by means of shut-off devices (40-51), wherein the pipeline system (30) comprises a first main sensor (20, 21, 22), wherein the control system is configured to read a first main signal from the first main sensor (20, 21, 22) and to control the shut-off devices (40-51), wherein the control system is configured to close all the shut-off devices (40-51) as soon as the first main signal reaches or exceeds a threshold value.

2.  Ship (70) according to Claim 1, **characterized in that** the first main sensor (20, 21, 22) is arranged above the first consumer.

3.  Ship (70) according to either of the preceding claims, **characterized in that** the ship (70) comprises at least a first auxiliary sensor (60-67), wherein the control system is configured to read a first auxiliary signal from the first auxiliary sensor (60-67).

4. Ship (70) according to Claim 3, **characterized in that** each portion (10-19) comprises at least a first auxiliary sensor (60-67) or a first main sensor (20, 21, 22).

5. Ship (70) according to one of the preceding claims, **characterized in that** a filling device is connected to the pipeline system (30), wherein the control system is configured to fill the pipeline system (30) using the filling device.

6. Ship (70) according to one of the preceding claims, **characterized in that** the ship (70) comprises at least one first pump for conveying a fluid through the pipeline system (30) and wherein the control system is configured to switch on and switch off the at least one first pump.

7. Ship (70) according to one of the preceding claims, **characterized in that** at least one portion (10-19) is formed by at least two sections (81-84), wherein the adjacent sections (81-84) are connected to each other so as to be able to be separated by means of auxiliary shut-off devices (91-94), wherein the auxiliary shut-off devices (91-94) between two adjacent sections (81-84) of a portion (10-19) can preferably be operated exclusively manually.

8. Ship (70) according to one of the preceding claims, **characterized in that** the ship (70) comprises at least one device for introducing test fluid into the pipeline system.

9. Method for damage limitation in a pipeline system (30) on a ship (70) according to one of the preceding claims, wherein the method comprises the following steps:

   a) detecting the first main signal,
   b) comparing the first main signal with a threshold value,
   c) when the threshold value is reached or exceeded, closing all the shut-off devices (40-51) between adjacent portions (10-19).

10. Method according to Claim 9, **characterized in that** the method comprises the following method steps:

    d) detecting the first auxiliary signals,
    e) determining the time change of the first auxiliary signals,
    f) identifying a sea-damaged portion,
    h) opening the shut-off devices (40-51) which are not adjacent to the sea-damaged portion.

11. Method according to either of Claims 9 and 10, **characterized in that** the method comprises the method step g) refilling the pipeline system (30).

12. Method according to one of Claims 9 to 11, **characterized in that** before, after or at the same time as the method step c), the method step c1) switching off the at least one first pump is carried out.

13. Method according to Claim 12, **characterized in that** after or at the same time as the method step h), the method step h1) switching on the at least one first pump is carried out.

14. Method according to one of Claims 10 to 13, **characterized in that** after method step h), the following method steps are carried out:

    i1) closing all the auxiliary shut-off devices (91-94) in the sea-damaged portion,
    j1) identifying the sea-damaged section,
    k1) opening the shut-off devices (40-51) and auxiliary shut-off devices (91-94) which are not adjacent to the sea-damaged section.

15. Method according to one of Claims 10 to 13, **characterized in that** after method step h), the following method steps are carried out:

    i2) identifying the sea-damaged section,
    j2) closing all the auxiliary shut-off devices (91-94) which are adjacent to the sea-damaged section,
    k2) opening the shut-off devices (40-51) which are not adjacent to the sea-damaged section.

**Revendications**

1. Navire (70), comprenant un système de conduites (30) et un système de commande, le système de conduites (30) servant à l'alimentation d'au moins un premier récepteur, le système de conduites (30) possédant au moins une première portion (10-19), une deuxième portion (10-19) et une troisième portion (10-19), des portions (10-19) voisines étant reliées entre elles de manière séparable au moyen de dispositifs d'arrêt (40-51), le système de conduites (30) possédant un premier capteur principal (20, 21, 22), le système de commande étant configuré pour la lecture d'un premier signal principal provenant du premier capteur principal (20, 21, 22) et pour commander les dispositifs d'arrêt (40-51), le système de commande étant configuré pour fermer tous les dispositifs d'arrêt (40-51) dès que le premier signal principal atteint ou dépasse une valeur de seuil.

2. Navire (70) selon la revendication 1, **caractérisé en**

**ce que** le premier capteur principal (20, 21, 22) est disposé au-dessus du premier récepteur.

3. Navire (70) selon l'une des revendications précédentes, **caractérisé en ce que** le navire (70) possède au moins un premier capteur auxiliaire (60-67), le système de commande étant configuré pour la lecture d'un premier signal auxiliaire en provenance du premier capteur auxiliaire (60-67).

4. Navire (70) selon la revendication 3, **caractérisé en ce que** chaque portion (10-19) possède au moins un premier capteur auxiliaire (60-67) ou un premier capteur principal (20, 21, 22).

5. Navire (70) selon l'une des revendications précédentes, **caractérisé en ce qu'**un dispositif de remplissage est relié au système de conduites (30), le système de commande étant configuré pour remplir le système de conduites (30) à travers le dispositif de remplissage.

6. Navire (70) selon l'une des revendications précédentes, **caractérisé en ce que** le navire (70) possède au moins une première pompe destinée à transporter un fluide à travers le système de conduites (30) et le système de commande étant configuré pour mettre en marche et arrêter l'au moins une première pompe.

7. Navire (70) selon l'une des revendications précédentes, **caractérisé en ce qu'**au moins une portion (10-19) est formée par au moins deux sections (81-84), les sections (81-84) voisines étant reliées entre elles de manière séparable au moyen de dispositifs d'arrêt auxiliaires (91-94), les dispositifs d'arrêt auxiliaires (91-94) entre deux sections (81-84) voisines d'une portion (10-19) pouvant être commandés de préférence exclusivement manuellement.

8. Navire (70) selon l'une des revendications précédentes, **caractérisé en ce que** le navire (70) possède au moins un dispositif pour introduire un fluide d'essai dans le système de conduites.

9. Procédé de limitation des dommages dans un système de conduites (30) sur un navire (70) selon l'une des revendications précédentes, le procédé comprenant les étapes suivantes :

    a) acquisition du premier signal principal,
    b) comparaison du premier signal principal à une valeur de seuil,
    c) lorsque la valeur de seuil est atteinte ou dépassée, fermeture de tous les dispositifs d'arrêt (40-51) entre des portions (10-19) voisines.

10. Procédé selon la revendication 9, **caractérisé en ce que** le procédé comprend les étapes de procédé suivantes :

    d) acquisition des premiers signaux auxiliaires,
    e) constatation de la modification dans le temps des premiers signaux auxiliaires,
    f) identification d'une portion ayant une avarie,
    h) ouverture des dispositifs d'arrêt (40-51) qui ne sont pas adjacents à la portion ayant une avarie.

11. Procédé selon l'une des revendications 9 et 10, **caractérisé en ce que** le procédé comprend l'étape de procédé g) remplissage d'appoint du système de conduites (30) .

12. Procédé selon l'une des revendications 9 à 11, **caractérisé en ce que** l'étape de procédé c1) arrêt de l'au moins une première pompe est exécutée avant, après ou simultanément avec l'étape de procédé c).

13. Procédé selon la revendication 12, **caractérisé en ce que** l'étape de procédé h1) mise en marche de l'au moins une première pompe est exécutée après ou simultanément avec l'étape de procédé h).

14. Procédé selon l'une des revendications 10 à 13, **caractérisé en ce que** les étapes de procédé suivantes sont exécutées après l'étape de procédé h) :

    i1) fermeture de tous les dispositifs d'arrêt auxiliaires (91-94) dans la portion ayant une avarie,
    j1) identification de la section ayant une avarie,
    k1) ouverture des dispositifs d'arrêt (40-51) et des dispositifs d'arrêt auxiliaires (91-94) qui ne sont pas adjacents à la section ayant une avarie.

15. Procédé selon l'une des revendications 10 à 13, **caractérisé en ce que** les étapes de procédé suivantes sont exécutées après l'étape de procédé h) :

    i2) identification de la section ayant une avarie,
    j2) fermeture de tous les dispositifs d'arrêt auxiliaires (91-94) qui sont adjacents à la section ayant une avarie,
    k2) ouverture des dispositifs d'arrêt (40-51) qui ne sont pas adjacents à la section ayant une avarie.

Fig. 1

Fig. 2

**IN DER BESCHREIBUNG AUFGEFÜHRTE DOKUMENTE**

**In der Beschreibung aufgeführte Patentdokumente**

- US 3848559 A